# EUROPEAN PATENT SPECIFICATION

(11) **EP 2 628 653 B1**
(45) Date of publication and mention of the grant of the patent: **30.07.2014**
(21) Application number: 13154888.5
(22) Date of filing: 12.02.2013
(51) Int. Cl.: B62B 3/00, B62B 3/02, A47B 31/04, A47B 31/00

(54) **Trolley with reducible overall dimensions**
Wagen mit reduzierbaren Gesamtabmessungen
Chariot ayant des dimensions hors-tout réductibles

(30) Priority: 16.02.2012 IT MI20120224
(43) Date of publication of application: 21.08.2013
(73) Proprietor: Italmodular S.r.l., 26025 Pandino, (CR) (IT)
(72) Inventor: Patrini, Gianantonio, 26010 Casaletto Vaprio (CR) (IT); Cremonesi, Emilio, 26025 Pandino (CR) (IT)
(74) Representative: Ripamonti, Enrico

(56) References cited:
- DE-A1- 19 500 531
- FR-A1- 2 303 151
- FR-A1- 2 596 349
- US-A- 2 982 422

## Description

The present invention relates to a trolley with overall dimensions that can be significantly reduced to facilitate the transport thereof and when it is not in use and, more in particular, a trolley adapted to accommodate at least one receptacle for holding articles (for example a shelf, tray or container), it being understood that this trolley can also accommodate a plurality of receptacles for holding articles, in particular trays used in canteens or containers used in the food industry.

It is known by those skilled in the art that there are used in canteens trolleys suitable to accommodate, in predetermined positions, a plurality of trays, after these have been utilised by canteen users. These trolleys have a frame structure, rectangular in shape if viewed in plan, and are provided with castors of swivelling type (normally four, arranged at the corners of the rectangular base), two of the castors being possibly provided with a brake.

In a simple example of this type of trolley, for 10 trays superimposed equidistant from one another, its structure comprises two lateral transverse frames lying in respective vertical and parallel planes. The two transverse frames are connected both at the front and at the back by at least two longitudinal crossbars. There are also known trolleys of this type for twenty or thirty trays, in substance obtained by respectively doubling or tripling the length of the longitudinal crossbars of the ten tray trolley, to obtain, respectively, two or three adjacent groups of trays. In particular, in addition to the two lateral transverse frames, there is also provided one intermediate transverse frame in the case of twenty trays and two intermediate transverse frames in the case of thirty trays.

In the prior art trolleys of this type, at the side of each transverse frame facing another transverse frame there is permanently fixed, normally by means of rivets, screws or spot welding, a supporting means provided with a plurality of bracket supports superimposed and equidistant (each bracket support comprises, for example, a pair of projecting horizontal bars). Each bracket support enables one of the two sides of a tray to rest thereon, the other side of the same tray resting on the corresponding bracket support of the supporting means fixed to the opposite side of the adjacent transverse frame. Therefore, the trays to be accommodated in the trolley are placed one on top of the other and spaced apart, for example in a single group of ten or more, or in two or three adjacent groups of ten or more.

At this point, it must be noted that in some canteens (for example university or company canteens) the number of meals to be served, and therefore the number of trays used, decreases considerably in certain periods of the year (in particular during the summer). However, to deal with the peaks in demand, the canteen must have an adequate number of trolleys to cover the maximum expected demand. This means that in the aforesaid periods a given number of tray trolleys are not used. However, these vacant trolleys occupy space and have overall dimensions which can interfere with the operations performed in the related rooms.

FR 2596349A1 discloses a trolley according to the preamble of claim 1 suitable to receive at least one object carrier element, and having a frame structure which is rectangular if in plant, equipped with wheels. Said structure comprises two lateral transversal frames that remain in corresponding parallel vertical planes and are connected, both in the front and rear part, by at least two longitudinal crosspieces.

Connecting means between the transversal frames and the longitudinal crosspieces are of the type optionally allowing the relative rotation in the horizontal plane of the transversal frames with respect to the longitudinal crosspieces, or the blocking of said rotation.

Therefore, an object of the present invention is to produce a trolley of the aforesaid type that, although not solving the aforesaid problem completely, at least enables its effects to be greatly reduced.

It has already been stated that the aforesaid supporting means for the trays are intended to remain permanently fixed, normally by means of rivets, screws or spot welding, to the related transverse frames, so that in the interface between supporting means and transverse frame there are slots in which dust and dirt can accumulate, and which is difficult to remove. Consequently, these trolleys also have the problem of being difficult to keep thoroughly clean and pose problems of hygiene, especially if used in the food sector (specifically in canteens).

Therefore, another object of the present invention is to produce a trolley of the aforesaid type that does not have this problem.

The objects specified are achieved with the trolley according to the appended claims.

The invention will be easier to understand from the following description of some embodiments thereof provided by way of example. In this description reference will be made to the accompanying drawings, wherein:
Fig. 1 is a perspective view of a trolley according to the present invention, in particular of the type to be utilised in canteens and suitable to accommodate ten trays;
Fig. 2 simply shows how an upper panel, a back panel and one panel for each of its two sides can be attached to the trolley of Fig. 1, so that the trays can only be inserted from the front part;
Fig. 3 is an enlarged perspective view of a single supporting means with ten bracket supports, utilisable in the trolley of Figs. 1 and 2, 7 and 10;

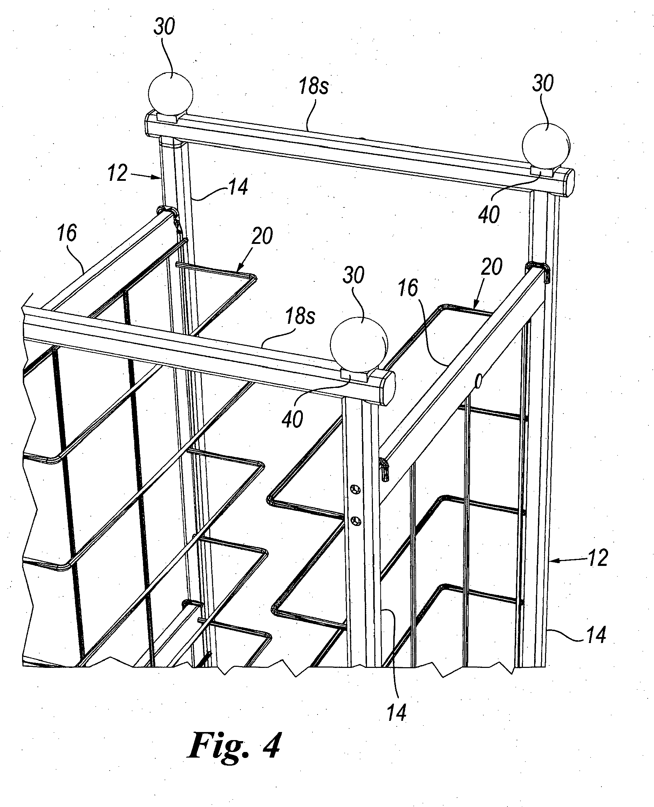

Fig. 4 is an enlarged perspective view of part of the upper portion of the trolley of Fig. 1;
Fig. 5 is an enlarged perspective view of a part of the lower portion of the trolley, in which a tubular upright of the related transverse frame is not represented to enable the parts inside this upright to be viewed;
Fig. 6 is an enlarged perspective view of only the upper part of the parts inside the same upright not represented in Fig. 5;
Fig. 7 is a perspective view of another trolley according to the present invention, of the type for twenty trays;

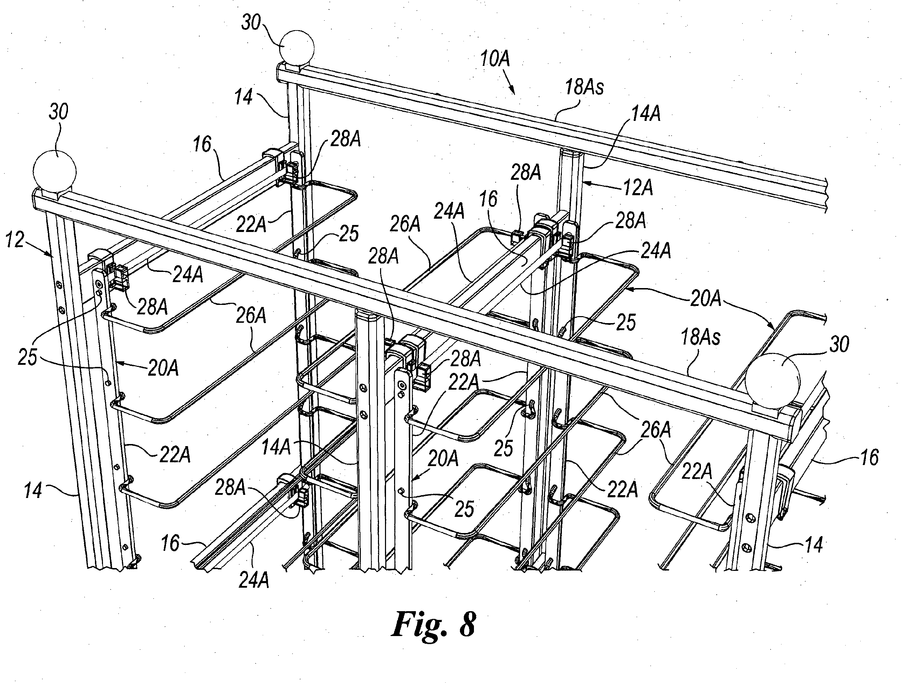

Fig. 8 is an enlarged perspective view of part of the upper portion of the trolley of Fig. 7;
Fig. 9 is a perspective view, further enlarged, of the top of one of the two uprights of the intermediate frame of the trolley of Fig. 7, the related upper longitudinal crossbar not being represented in the figure;
Fig. 10 is a perspective view of only the structure of a further trolley according to the present invention, of the type for thirty trays;
Fig. 11 is a perspective view of a trolley according to the invention, of the type with two shelves (shown separated from the structure to enable this latter to be viewed in more detail).

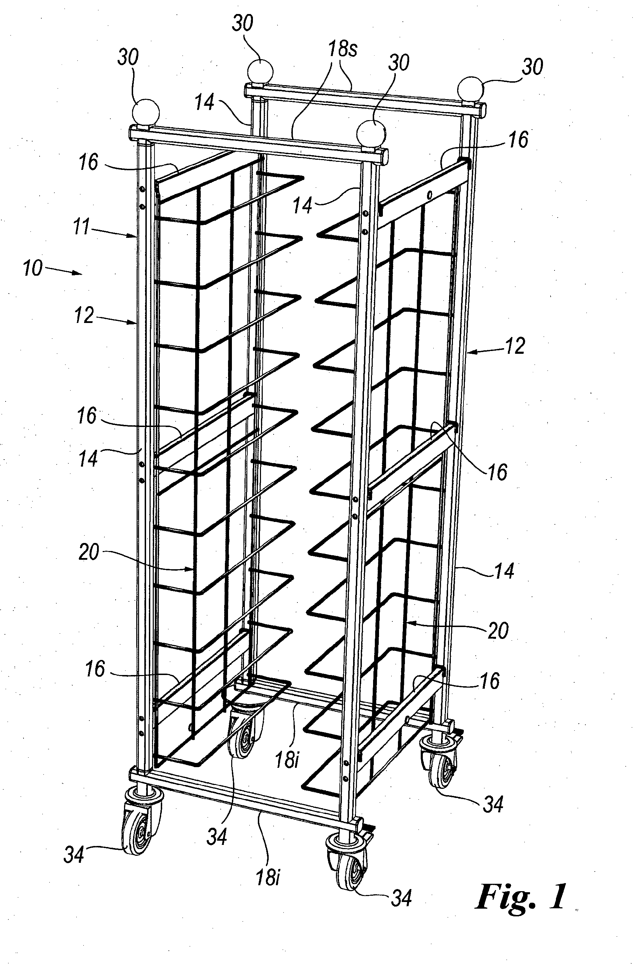

In Fig. 1 it can be seen how the trolley 10 represented therein comprises a frame structure 11, in turn comprising two identical lateral transverse frames 12 lying in respective parallel vertical planes, each frame 12 having two tubular uprights 14 connected by three horizontal crossbars 16. As can also be seen in Fig. 1, the uprights 14 extend upwards and downwards beyond the upper and lower crossbars 16 and are connected, at their upper and lower ends, by horizontal longitudinal crossbars 18s and 18i perpendicular to the transverse frames 12. Therefore, the structure of the trolley 10 has a rectangular shape in plan.

In Fig. 1 it can also be seen that the trolley 10 is provided with what were previously called supporting means, indicated in this figure with 20, which enable ten receptacles for holding articles, in particular trays (not shown for simplicity), of the type used in canteens to be accommodated, superimposed and spaced apart.

Incidentally, it must be specified as of now that, in place of a plurality of trays, these supporting means could accommodate a plurality of shelves (in particular simple rectangular supporting surfaces) or even containers (in particular tubs), to enable a variety of articles to be arranged on the shelves or in the containers. The use of a trolley according to the present invention is in fact not limited to the canteen sector or to the food sector.

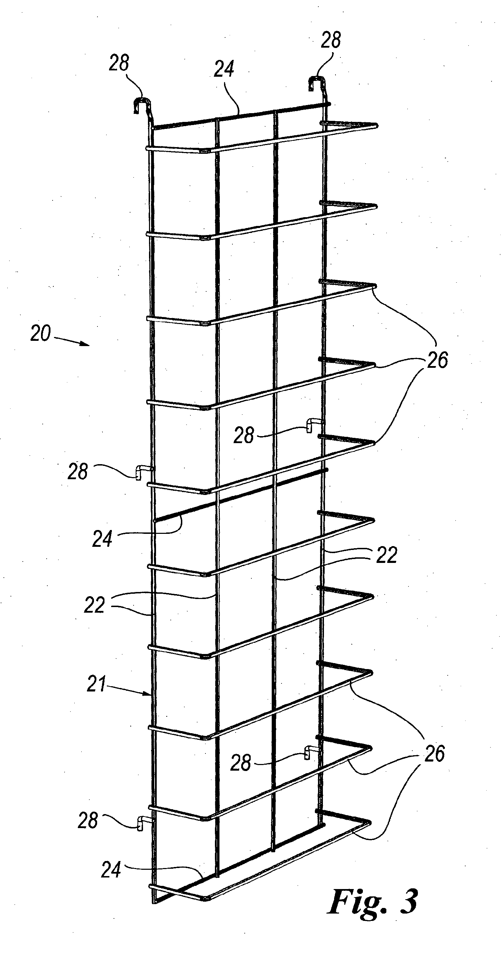

A better view of one of the two supporting means used in the trolley 10 is given in Fig. 3. As can be seen, in substance this is a frame 21 formed by four vertical bars 22 and three horizontal bars 24, a plurality of brackets 26 formed by U-shaped bars projecting from the frame 21, all preferably made of stainless steel, chrome plated steel, aluminium or suitable plastic material. The supporting means 20 is also provided with hooks 28 that enable it to be attached to the inner side of each of the two transverse frames 12 (as can be seen in Fig. 1), and more precisely to be hooked to the horizontal crossbars 16. Therefore the two supporting means 20 of the trolley 10 are opposed and enable a related tray already utilised by a diner or, if required, also several superimposed trays not yet utilised, to be placed on each pair of corresponding brackets 26 with the same elevation.

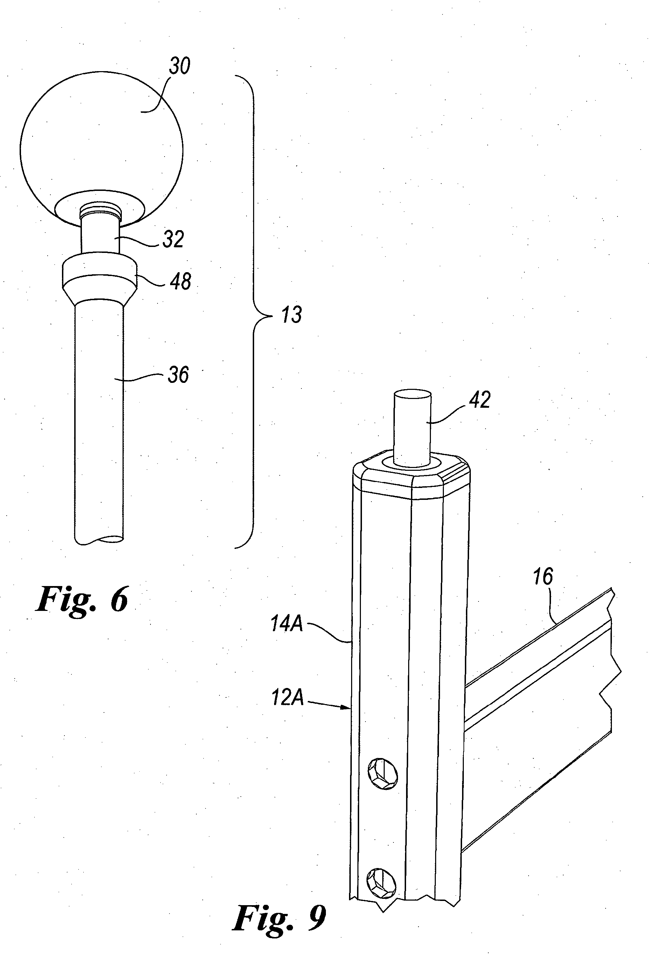

The trolleys according to the present invention are provided with connection means between the transverse frames and the longitudinal crossbars, to enable optional relative rotation thereof in the horizontal plane, or blocking of this rotation. In the specific case of the trolley 10, the aforesaid connection means are indicated as a whole with 13 and, as explained below, comprise various elements, and more in particular a vertical rod 32 (visible in Fig. 6) inserted into each tubular upright 14 of the trolley 10. The top part of this rod 32 is threaded to enable screwing thereon of a grasping element for the hands, provided with female thread, in this case a knob 30 (although it could also be a handle or handgrip). The connection means 13 also comprise a tube 36 into which the rod 32 is inserted and which is shorter in length than this latter. The rod 32 projects both from the upper end and from the lower end of the upright 14. Resting on the top of the tube 36 is a truncated cone shaped spacer 48, perforated coaxially to enable it to be inserted over the rod 32, the purpose of which will be explained below.

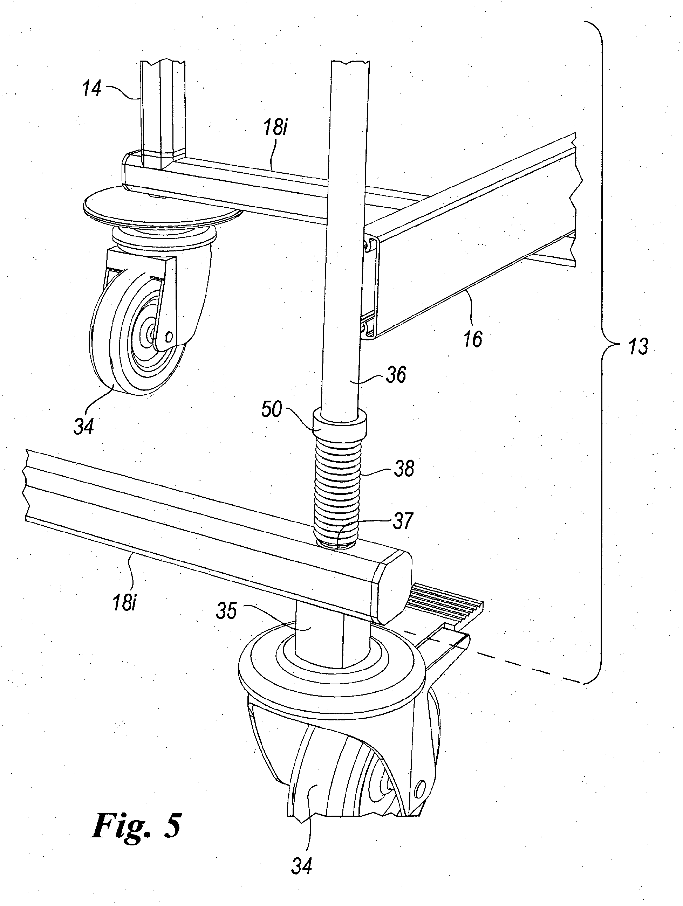

The rod 32 passes through (via the through hole 37 visible in Fig. 5) the lower longitudinal crossbar 18i of the trolley 10 and is fixed in a conventional manner both to this crossbar and to a support 35 for a swivelling castor 34. Usually, two of the four castors 34 on the trolley 10 are provided with a brake.

The connection means 13 also comprise a helical spring 38 (Fig. 5), also inserted over the rod 32, and against which spring a cylindrical spacer 50 and the lower end of the tube 36 rest. The function of the spacer 50 will be explained below.

In the situation of the trolley 10 of Fig. 1, the spring 38, contained in each upright 14, is in a condition of maximum compression thereof and a related end of the upper longitudinal crossbar 18s, after screwing the knob 30 down fully, is pressed both against the top of the tubular upright 14, suitably saddle shaped so as to hold the crossbar 18i joined thereto, and against the truncated cone shaped spacer 48.

The lower end of the upright 14 is also saddle shaped and in this situation accommodates the lower crossbar 18i joined thereto.

Due to the aforesaid saddle shapings, when the knobs 30 are screwed down fully, the transverse frames 12 are maintained firmly in the position shown in Fig. 1, i.e. perpendicular to the longitudinal crossbars 18s and 18i. In the specific case of the trolley 10, between each knob 30 and the upper longitudinal crossbar 18s there is interposed a positioning plate 40 perforated to enable the rod 32 to pass through, the lower part of this plate 40 also being saddle shaped so as to adapt to the same crossbar 18s in a manner joined thereto (however, a simple washer could also suffice for this purpose).

It must be noted that the connection means that optionally enable relative rotation of the transverse frames with respect to the crossbars may be produced in a different way to those described above and indicated with 13, any person skilled in the art of mechanical engineering being able to find other equivalent solutions.

Returning to the connection means 13, and to the situation of Fig. 1 (knobs 30 screwed down fully), if after having removed the supporting means 20 from the trolley 10 (by unhooking them from the crossbars 16 of the transverse frames 12), the knobs 30 are unscrewed, the tubes 36, thrust upwards by the related springs 38, in turn thrust the truncated cone shaped spacers 48 upwards and lift the two upper longitudinal crossbars 18s, so that they exit from the top saddles of the related uprights 14. Continuing to unscrew the knobs 30, each lower spacer 50 comes into contact at a certain point with a related stop (not shown for simplicity) provided inside the related upright 14, so that by continuing to unscrew the knobs 30 the springs 38 also cause lifting of the transverse frames 12, which can thus be rotated easily with respect to the longitudinal crossbars 18s and 18i, it being possible to take the structure 11 from a configuration with a rectangular shape in plan to a greatly flattened parallelogram configuration. This results in a substantial decrease in the overall dimensions of the structure 11, useful when the trolley 10 is not to be used for a certain period of time, so that it can be stored occupying a decidedly smaller space, or when the trolley must be transported. Tightening of the knobs 30 ensures that the structure 11 remains in its condition of minimum overall dimensions.

When wishing to return the trolley to use, this is performed with a reverse operation to the one described above, screwing the knobs down fully to ensure the required stability of the trolley 10, which can be used again after having reattached the supporting means 20 to the related crossbars 16 of its transverse frames 12.

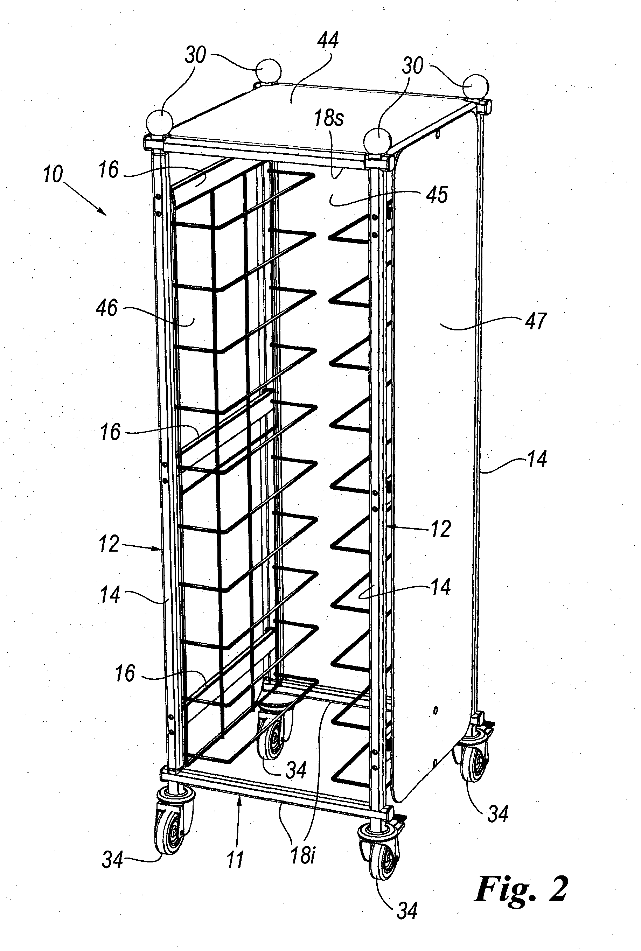

In Fig. 2 it can be seen how an upper panel 44 (which can also be used as a supporting surface), a back panel 45 (which also acts as tray stop) and a panel, respectively 46 and 47, for each of the two sides can be attached to the trolley 10, so that the trays can only be inserted from the front part of the trolley. The panels 44, 45, 46 and 47 are fixed to the structure of the trolley 10 so as to be easily removable.

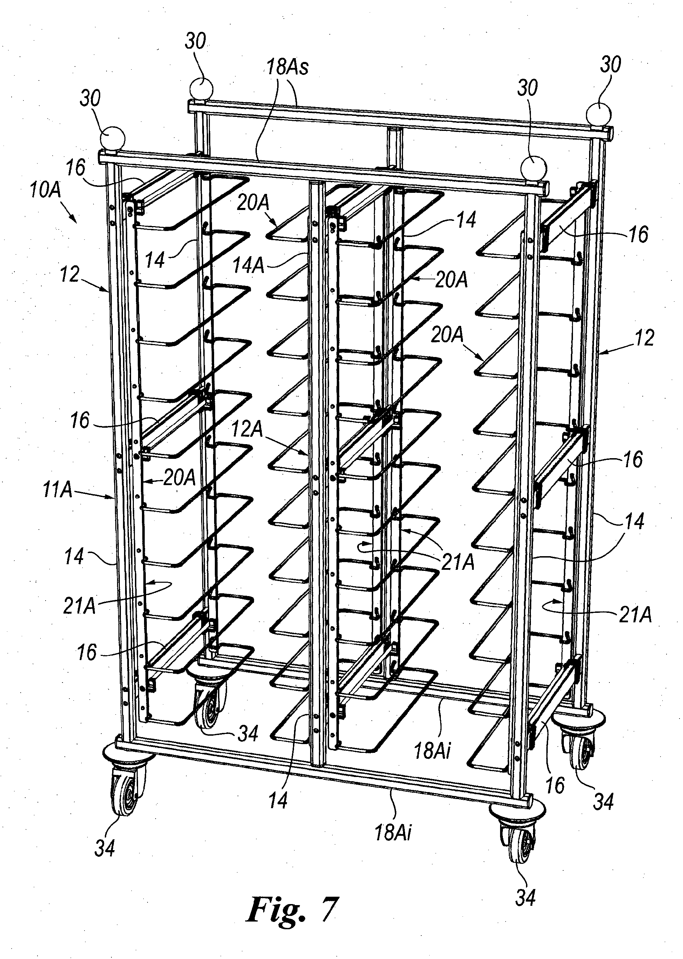

Fig. 7 shows a trolley 10A for trays with double capacity (twenty trays) with respect to the trolley 10. The structure 11A of the trolley 10A differs substantially from that (11) of the trolley 10 due to the fact that the longitudinal crossbars 18As and 18Ai are greater in length and that halfway along the length thereof they carry an intermediate transverse frame 12A, which differs from the end transverse frames 12 in that the two ends of its uprights 14A are not saddle shaped, but have a simple pin projecting respectively upwards (see, for example the pin 42 of Fig. 9) and downwards, said pin being joinable to a corresponding seat provided in the related longitudinal crossbar 18Ai and 18As to produce a cylindrical hinge with vertical axis so as to enable relative rotation of the intermediate transverse frame 12A with respect to these longitudinal crossbars. However, it must be borne in mind that, in order for all the uprights to be the same, the uprights 14A can also have saddle shaped ends.

In any case, elements of the trolley 10A identical or similar to those of the trolley 10 are indicated with the same reference numerals.

The trolley 10A also uses supporting means which, however, in the specific case illustrated, differ from those (20) of the trolley 10 (although they could also be the same), and therefore have been indicated with 20A. In particular, the trolley 10A is provided with supporting means 20A on both sides of the intermediate transverse frame 12A. The supporting means 20A comprise a rectangular frame 21A formed in this case by two vertical bars 22A with a rectangular cross section and three horizontal bars 24A with a circular cross section. The vertical bars 22A have a series of equidistant through holes 25 into which to insert the related ends of brackets 26A formed by Ω shaped bars, elastically deformable to enable insertion thereof. The supporting means 20A are not provided with their own hooks, but are hung on separate hooks 28A, in turn hooked to the crossbars 16 of the transverse frames 12 and 12A.

It is clear that the supporting means can be produced in different ways to those described above. In particular, they can have bracket elements that fold down to enable rotation of the transverse frames with respect to the longitudinal crossbars without the need to remove the supporting means from these frames.

It is important to note that also in the case of the trolley 10A, the connection means between the lateral transverse frames 12, 12A and the longitudinal crossbars 18As and 18Ai are the same as those indicated as a whole with 13 with reference to the trolley 10. It must be noted that these connection means 13 are also used to enable or prevent optional relative rotation between the intermediate frame 12A and the related longitudinal crossbars 18As and 18Ai, so that the uprights 14A of the intermediate frame 12A do not contain the vertical rod 32, the tube 36 with the related spacers 48 and 50, or the spring 38, but simply the aforesaid pin (42 in Fig. 9), which projects upwards and downwards from the upper and lower ends of the two uprights 14A.

In view of the above, also for the trolley 10A, after removing the supporting means 20A from the structure 11A and unscrewing the knobs 30, the transverse frames 12, and consequently the intermediate frame 12A, can be rotated with respect to the longitudinal crossbars 18Ai and 18As (Fig. 7), with the result that the structure 11A is taken from a rectangular configuration in plan to a greatly flattened parallelogram configuration in plan, with reduced overall dimensions.

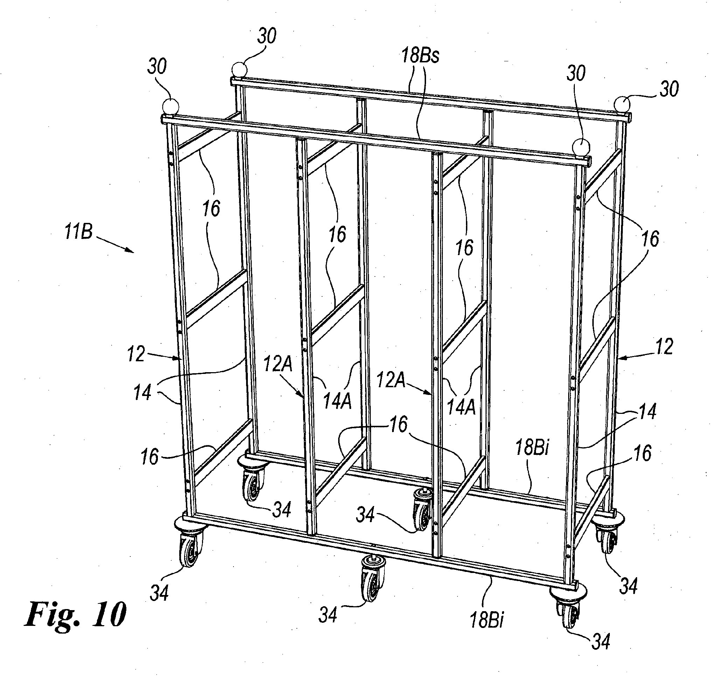

Fig. 10 shows only the structure 11B of a trolley for trays with triple capacity (thirty trays) with respect to the trolley 10. As can be noted from this figure, the structure 11B differs from that (11 and 11A) of the trolleys 10 and 10A both due to the greater length of the longitudinal crossbars 18Bi and 18Bs and due to the presence of two intermediate transverse frames 12A identical to that (indicated with the same reference numeral) of the trolley 10A. Also in this figure, identical or similar elements to those of the structure 11A of the trolley 10A are indicated with the same reference numerals. Consequently, no further explanations are deemed necessary for Fig. 10.

Naturally, just as the trolley 10 (Fig. 2), the other trolleys illustrated in the figures can also be provided with two side panels, one back panel and one top panel.

Although it has been said, while describing the trolleys 10 and 10A, that they are of the type suitable to accommodate trays of the type used in canteens, it is stressed that they can also be used to accommodate other types of receptacles for holding articles and in particular shelves on which to place articles of any type, or containers for various articles, if necessary adapting the supporting means with which the trolley is provided to accommodate these shelves or containers.

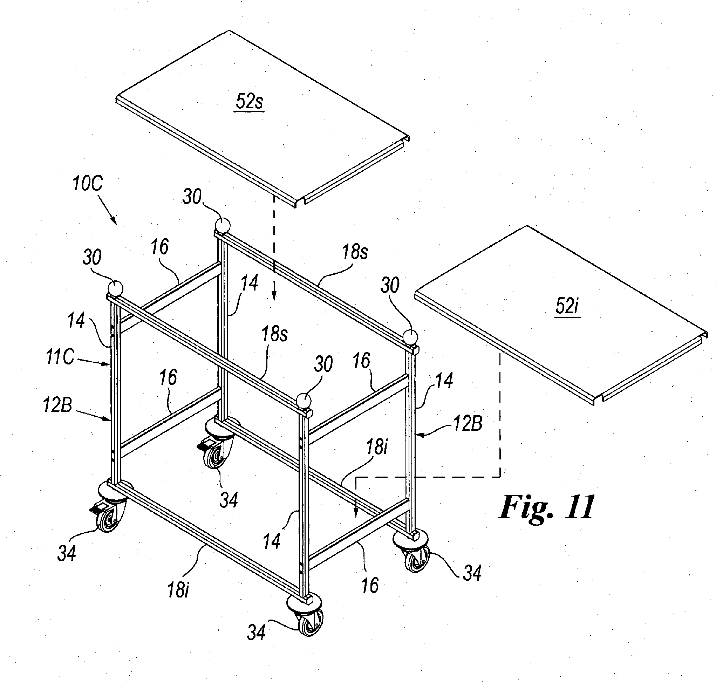

Finally, Fig. 11 shows a trolley 10C that, while falling within the scope of the present invention, can be used as a service trolley. The trolley 10C differs due to the fact that its structure 11C comprises two lateral transverse frames 12B, each provided with only two crossbars 16. The connection means between the transverse frames (12B) and the longitudinal crossbars (18s, 18i) are also the same as those of the trolleys described previously and indicated as a whole with 13, while the supporting means differ, being constituted here simply by the same upper 18s and lower 18i longitudinal crossbars, which respectively accommodate the shelves 52s and 52i directly. For the remaining part, elements identical or similar to those of the trolley 10 are indicated with the same reference numerals.

It is also deemed important to point out that the fact that the supporting means are removably connected to the structure of the trolleys (removal being greatly facilitated, as they are simply hung) enables thorough cleaning of both the structure 11, 11A and 11B of the related trolley, and of the same supporting means 20 and 20A, which is a considerable advantage in the case in which the trolleys according to the present invention are utilised in the food sector. From this point of view, the situation of the trolley 10C is even better.

Finally, it must be noted that the supporting means can also be configured so as to be removably attached both to the transverse frames and to the crossbars, and even to be removably attached directly to the structure at the corners of the rectangle constituted by the same structure of the trolley if viewed in plan.

## Claims

1. Trolley (10; 10A; 10C) adapted to accommodate at least one receptacle (52s, 52i) for holding articles, and having a frame structure (11; 11A; 11B; 11C), with a rectangular shape if viewed in plan, provided with castors (34), this structure comprising two lateral transverse frames (12; 12B), which lie in respective parallel vertical planes and are connected both at the front and at the back by at least two longitudinal crossbars (18s, 18i; 18As, 18Ai; 18Bs, 18Bi), supporting means (20; 20A; 18s, 18i) being attached to the structure (11; 11A; 11B; 11C) to accommodate the aforesaid receptacles (52s, 52i) for holding articles, the connection means (13) between the transverse frames (12; 12B) and the longitudinal crossbars (18s, 18i; 18As, 18Ai; 18Bs, 18Bi) being of the type that enable optional relative rotation in the horizontal plane of the transverse frames (12; 12B) with respect to the longitudinal crossbars (18s, 18i; 18As; 18Ai; 18Bs, 18Bi), or blocking of this rotation, **characterized in that** the uprights (14; 14A) of the lateral transverse frames (12; 12B) are tubular, the connection means (13) between the lateral transverse frames (12; 12B) and the longitudinal crossbars (18s, 18i; 18As, 18Ai; 18Bs, 18Bi) that enable optional relative rotation thereof or blocking of this rotation comprising:
a tube (36) inserted into each tubular upright (14), the related upper longitudinal crossbar (18s; 18As; 18Bs) resting, directly or indirectly, on the upper end of the tube (36) ;
a vertical rod (32) inserted into the tube (36) and the top part whereof is threaded to enable a grasping element (30) for the hands, provided with female thread, to be screwed thereon, the rod (32) having a greater length to the tube (36) and projecting both from the upper end and from the lower end of the upright (14), to this lower end there is fixed both to the related lower longitudinal crossbar (18i; 18Ai; 18Bi) and a support (35) of a swivelling castor (34) of the trolley (1010A; 10C);
a helical spring (38), inserted onto the rod (32) and also contained in the related upright (14), the spring (38) resting, directly or indirectly, on the lower longitudinal crossbar (18i; 18Ai; 18Bi), the tube (36) resting on the top of the spring (38);
a saddle shaping of the upper and lower ends of the uprights (14) to accommodate joined thereto respectively the related upper longitudinal crossbar (18s; 18As; 18Bs) and the related lower longitudinal crossbar (18i; 18Ai; 18Bi) when the trolley (10; 10A; 10C) has a rectangular shape in plan and the grasping elements (30) for the hands are screwed down fully onto the corresponding rod (32).

2. Trolley (10A) according to claim 1, wherein the structure (11A, 11B) also comprises one or more intermediate transverse frames (12A), parallel to the two lateral transverse frames (12) and connected to the aforesaid longitudinal crossbars (18As, 18Ai; 18Bs, 18Bi), and the trolley (10A) is provided with intermediate transverse frames (12A), vertical cylindrical hinge connection means (42) are provided between the intermediate transverse frames (12A) and the longitudinal crossbars (18As, 18Ai; 18Bs, 18Bi).

3. Trolley (10; 10A) according to claim 1, wherein the supporting means (20; 20A) are attached to the side of each transverse frame (12; 12A) facing the adjacent transverse frame (12; 12A), the supporting means comprising bracket elements (26; 26A) on which the related side of a receptacle for holding articles rests.

4. Trolley according to claim 3, wherein the supporting means comprise bracket elements that fold down to enable rotation of the transverse frames (12; 12A) with respect to the longitudinal crossbars (18s, 18i; 18As, 18Ai; 18Bs, 18Bi).

5. Trolley (10; 10A) according to claim 1, wherein the supporting means (20; 20A) are removably attached to the structure (11; 11A, 11B).

6. Trolley (10C) according to claim 1, wherein the supporting means comprise the same longitudinal crossbars (18s, 18i), on which the receptacles for holding articles (52s, 52i) rest directly.

7. Trolley (10; 10A) according to claim 3, wherein each supporting means (20; 20A) comprises a plurality of bracket supports (26; 26A) superimposed and equidistant, each bracket support enabling one of the two sides of a receptacle for holding articles to rest thereon.

8. Trolley (10; 10A) according to claim 3, wherein the supporting means (20; 20A) are hung on the related transverse frame (12; 12A).

9. Trolley (10; 10A; 10C) according to claim 1, wherein arranged on the top of each tube (36) is a truncated cone shaped spacer (48) for centring of the rod (32) with respect to the upright (14), perforated coaxially to enable it to be inserted in turn centred over the tube (36), a second spacer (50) perforated coaxially, to enable it also to be inserted centred over the rod (32), is arranged over the spring (38), there being provided inside the related upright (14) positioning means for the second spacer (50) so that in a given point of the operation to unscrew the grasping means (30) the springs (38) also cause lifting of the transverse frames (12; 12B) to facilitate rotation thereof with respect to the longitudinal crossbars (18s, 18i; 18As, 18Ai; 18Bs, 18Bi).

10. Trolley (10; 10A; 10C) according to claim 1, wherein between the grasping elements (30) and the related upper longitudinal crossbars (18s; 18As; 18Bs) there is interposed a perforated plate (40), saddle shaped at the bottom to accommodate the upper longitudinal crossbar (18s; 18As; 18Bs) joined thereto.

11. Trolley (10A) according to claim 2, wherein the structure (11A) is provided with an intermediate transverse frame (12A).

12. Trolley according to claim 2, wherein the structure (11B) is provided with two intermediate transverse frames (12A).

13. Trolley (10; 10A) according to claim 3, wherein the supporting means (20) comprise a frame (21) formed by vertical bars (22) and horizontal bars (24), a plurality of bracket supports (26) formed by horizontally arranged U-shaped bars projecting from the frame (21), the frame (21) being provided with hooks (28) that enable it to be hung on the crossbars (16) of the corresponding transverse frame (12; 12A).

14. Trolley (10; 10A) according to claim 3, wherein the supporting means (20A) comprise:
a frame (21A) formed by two vertical bars (22A) and horizontal bars (24A), the vertical bars (22A) having a corresponding series of through holes into which to insert the ends of horizontal bracket supports (26A) formed by Q shaped bars, elastically deformable to enable insertion thereof;
hook elements (28A) attachable to the crossbars (16) of the transverse frames (12, 12A) and to which to attach the corresponding frames (21A).

## Patentansprüche

1. Trolley (10; 10A; 10C) geeignet zur Aufnahme von mindestens einem Behälter (52s, 52i) zum Halten von Gegenständen, der eine Rahmenstruktur (11; 11A; 11B; 11C) mit einer rechteckigen Draufsicht hat und der mit Rollen (34) versehen ist, wobei diese Struktur zwei seitliche Querrahmen (12; 12B) umfasst, die an entsprechenden, parallelen, senkrechten Ebenen liegen und die sowohl mit der Vorderseite als auch mit der Rückseite durch mindestens zwei längsverlaufende Querstangen (18s, 18i, 18As, 18Ai; 18Bs, 18Bi) verbunden sind, wobei Unterstützungsmittel (20; 20A; 18s, 18i) der Struktur (11; 11A; 11B; 11C) angeschlossen sind, um die genannten Behälter (52s, 52i) zum Halten von Gegenständen aufzunehmen, wobei die Verbindungsmittel (13) zwischen den Querrahmen (12; 12B) und den längsverlaufenden Querstangen (18s, 18i; 18As, 18Ai; 18Bs, 18Bi) von einer solchen Art sind, dass sie die optionale relative Drehung von den Querrahmen (12; 12B) auf der waagerechten Ebene gegenüber den längsverlaufenden Querstangen (18s, 18i; 18As, 18Ai; 18Bs, 18Bi) oder das Sperren davon erlauben, **dadurch gekennzeichnet, dass** die Pfosten (14; 14A) der seitlichen Querrahmen (12; 12B) rohrförmig sind, wobei die Verbindungsmittel (13) zwischen den seitlichen Querrahmen (12; 12B) und den längsverlaufenden Querstangen (18s, 18i; 18As, 18Ai; 18Bs, 18Bi), die die optionale relative Drehung davon oder die Sperre dieser Drehung erlauben, umfassen:
ein Rohr (36), das in jeden rohrförmigen Pfosten (14) eingeführt ist, wobei die zugehörige obere längsverlaufende Querstange (18s; 18As; 18Bs) mittelbar oder unmittelbar an dem oberen Ende des Rohrs (36) liegt;
eine senkrechte Stange (32), die in das Rohr (36) eingeführt ist und deren obere Ende gewindegeschnitten ist, um ein Greifelement (30) mit Innengewinde zum Schrauben daran für die Hände zu erlauben, wobei die Stange (32) länger als das Rohr (36) ist und sowohl aus dem oberen Ende als auch aus dem unteren Ende des Pfostens (14) hervorragt, wobei das obere Ende sowohl mit dem zugehörigen unteren längsverlaufenden Querrstange (18i; 18Ai; 18Bi) als auch mit einer Unterstützung (35) einer schwenkbaren Rolle (34) des Trolleys (10; 10A; 10C) verbunden ist;
eine Schraubenfeder (38), die an die Stange (32) eingeführt ist und auch in dem zugehörigen Pfosten (14) enthalten ist, wobei die Feder (38) mittelbar oder unmittelbar an der unteren längsverlaufenden Querstange (18i; 18Ai; 18Bi) liegt, wobei das Rohr (36) an dem oberen Ende der Feder (38) liegt;
ein sattelförmiges oberes und unteres Ende der Pfosten (14), um die damit verbundene obere längsverlaufende Querstange (18s; 18As; 18Bs) beziehungsweise untere längsverlaufende Querstange (18i; 18Ai; 18Bi) aufzunehmen, wenn der Trolley (10; 10A; 10C) eine rechteckige Draufsicht hat und die Greifelemente (30) für die Hände an die entsprechende Stange (32) ganz zugeschraubt sind.

2. Trolley (10A) nach dem Anspruch 1, wo die Struktur (11A; 11B) auch einen oder mehrere zwischenliegende Querrahmen (12A) auch umfasst, die parallel zu den zwei seitlichen Querrahmen (12) sind und die mit den genannten längsverlaufenden Querstangen (18As, 18Ai; 18Bs, 18Bi) sind, und wo der Trolley (10A) mit zwischenliegenden Querrahmen (12A) versehen ist, wobei senkrechte zylindrische Gelenkverbindungsmittel (42) zwischen den zwischenliegende Querrahmen (12A) und den längsverlaufenden Querstangen (18As, 18Ai; 18Bs, 18Bi) versehen sind.

3. Trolley (10; 10A) nach dem Anspruch 1, wo die Unterstützungmittel (20; 20A) an der dem angrenzenden Querrahmen (12; 12A) gegenüberstehenden Seite des jeweiligen Querrahmens (12; 12A) angeschlossen sind, wobei die Unterstützungsmittel Bügelelemente (26; 26A) umfassen, woran die zugehörige Seite eines Behälters zum Halten von Gegenständen liegt.

4. Trolley nach dem Anspruch 3, wo die Unterstützungsmittel herunterklappende Bügelelemente umfassen, um die Drehung der Querrahmen (12; 12A) gegenüber den längsverlaufenden Querstangen (18s, 18i; 18As, 18Ai; 18Bs, 18Bi) zu erlauben.

5. Trolley (10; 10A) nach dem Anspruch 1, wo die Unterstützungsmittel (20; 20A) der Struktur (11; 11A, 11B) abnehmbar angeschlossen sind.

6. Trolley (10C) nach dem Anspruch 1, wo die Unterstützungsmittel dieselben (18s, 18i) umfassen, woran die Behälter zum Halten von Gegenständen (52s, 52i) unmittelbar liegt.

7. Trolley (10; 10A) nach dem Anspruch 3, wo die Unterstützungsmittel (20; 20A) jeweils eine Vielzahl von überlagerten, gleichabständigen Bügelunterstützungen (26; 26A) umfassen, wobei die Bügelunterstützungen jeweils eine der zwei Seiten eines Behälters zum Halten von Gegenständen erlauben, daran zu liegen.

8. Trolley (10; 10A) nach dem Anspruch 3, wo die Unterstützungsmittel (20; 20A) an dem zugehörigen Querrahmen (12; 12A) hängen.

9. Trolley (10; 10A; 10C) nach dem Anspruch 1, wo am oberen Ende jedes Rohrs (36) gibt es einen kegelstumpförmigen Abstandhalter (48), um die Stange (32) gegenüber dem Pfosten (14) zu zentrieren, wobei der Abstandhalter koaxial durchlöchert ist, um auf dem Rohr (36) zentriert eingeführt zu werden, wobei ein zweiter Abstandhalter (50) koaxial durchlöchert ist, um auch auf der Stange (32) zentriert eingeführt zu werden, und auf der Feder (38) angeordnet ist, wobei innerhalb des zugehörigen Pfostens (14) Anordnungsmittel für den zweiten Abstandhalter (50) vorgesehen sind, so dass in einer bestimmten Zeitpunkt des Betriebs die Greifelemente (30) aufgeschraubt werden und die Feder (38) auch die Querrahmen (12; 12B) anheben, um die Drehung davon gegenüber den längsverlaufenden Querstangen (18s, 18i; 18As, 18Ai; 18Bs, 18Bi) zu begünstigen.

10. Trolley (10; 10A; 10C) nach dem Anspruch 1, wo zwischen den Greifelementen (30) und den zugehörigen oberen längsverlaufenden Querstangen (18s; 18As; 18Bs) eine durchlöcherte Platte (40) zwischengelegt ist, die am Boden sattelförmig ist, um die damit verbundene obere längsverlaufende Querstange (18s; 18As; 18Bs) aufzunehmen.

11. Trolley (10A) nach dem Anspruch 2, wo die Struktur (11A) mit einem zwischenliegenden Querrahmen (12A) versehen ist.

12. Trolley nach dem Anspruch 2, wo die Struktur (11B) mit zwei zwischenliegenden Querrahmen (12A) versehen ist.

13. Trolley (10; 10A) nach dem Anspruch 3, wo die Unterstützungsmittel (20) einen Rahmen (21) umfassen, der von senkrechten Stangen (22) und waagrechten Stangen (24) gebildet ist, wobei eine Vielzahl von von U-förmigen, waagerechten Stangen gebildeten Bügelunterstützungen (26) aus dem Rahmen (21) hervorragen, wobei der Rahmen (21) mit Haken (28) versehen ist, die ihn erlauben, an den Querstangen (16) des entsprechenden Querrahmens (12; 12A) zu hängen.

14. Trolley (10; 10A) nach dem Anspruch 3, wo die Unterstützungsmittel (20A) umfassen:
einen von zwei senkrechten Stangen (22A) und waagerechten Stangen (24A) gebildeten Rahmen (21A), wobei die senkrechten Stangen (22A) eine entsprechende Reihe von Durchgangsbohrungen aufweisen, worin die Enden der von Ω-förmigen Stangen gebildeten waagerechten Bügelunterstützungen (26A) eingeführt werden, die elastisch verformbar sind, um eingeführt werden zu können;
Hakenelemente (28A), die an die Querstangen (16) der Querrahmen (12, 12A) angeschlossen werden können, um die entsprechenden Rahmen (21A) daran anzuschließen.

## Revendications

1. Chariot (10; 10A; 10C) apte à loger au moins un récipient (52s, 52i) pour contenir des produits et ayant une structure à cadre (11; 11A; 11B; 11C), de forme rectangulaire si visualisée en plan, pourvue de roulettes (34), cette structure comprenant deux cadres transversaux (12; 12B) latéraux, situés sur leurs respectifs plans verticaux parallèles et liés à la partie antérieure aussi bien qu'à la partie postérieure par au moins deux barres transversales longitudinales (18s, 18i, 18As, 18Ai; 18Bs, 18Bi), des moyens de support (20; 20A; 18s, 18i) étant fixés à la structure (11; 11A; 11B; 11C) pour loger lesdits récipients (52s, 52i) pour contenir des produits, les moyens de connexion (13) entre les cadres transversaux (12; 12B) et les barres transversales longitudinales (18s, 18i; 18As, 18Ai; 18Bs, 18Bi) étant d'un type qui permet la rotation relative optionnelle sur le plan horizontal des cadres transversaux (12; 12B) par rapport aux barres transversales longitudinales (18s, 18i; 18As, 18Ai; 18Bs, 18Bi) ou bien le blocage de cette rotation, **caractérisé en ce que** les montants (14; 14A) des cadres transversaux (12; 12B) latéraux sont tubulaires, les moyens de connexion (13) entre les cadres transversaux (12; 12B) latéraux et les barres transversales longitudinales (18s, 18i; 18As, 18Ai; 18Bs, 18Bi) qui permettent leur rotation relative optionnelle ou le blocage de cette rotation comprenant :
un tuyau (36) introduit dans chaque montant tubulaire (14), la respective barre transversale longitudinale supérieure (18s; 18As; 18Bs) reposant, directement ou indirectement, sur l'extrémité supérieure du tuyau (36) ;
une tige verticale (32) introduite dans le tuyau (36) et dont la partie supérieure est filetée pour permettre de visser sur ladite un élément de préhension (30) pour les mains, pourvu d'un filetage femelle, la tige (32) ayant une longueur supérieure à celle du tuyau (36) et saillant de la partie supérieure aussi bien que de la partie inférieure du montant (14), cette partie inférieure étant fixée à la barre transversale longitudinale inférieure associée (18i; 18Ai; 18Bi) aussi bien qu'à un support (35) d'une roulette (34) pivotante du chariot (10; 10A; 10C) ;
un ressort hélicoïdal (38), introduit sur la tige (32) et aussi contenu dans le montant (14) associé, le ressort (38) reposant, directement ou indirectement, sur la barre transversale longitudinale inférieure (18i; 18Ai; 18Bi), le tuyau (36) reposant sur l'extrémité supérieure du ressort (38) ;
une forme de selle des extrémités supérieure et inférieure des montants (14) pour loger, jointes à elles, respectivement la barre transversale longitudinale supérieure associée (18s; 18As; 18Bs) et la barre transversale longitudinale inférieure associée (18i; 18Ai; 18Bi) lorsque le chariot (10; 10A; 10C) a une forme rectangulaire visualisée en plan et que les éléments de préhension (30) pour les mains sont vissés complètement sur la tige correspondante (32).

2. Chariot (10A) selon la revendication 1, où la structure (11A; 11B) comprend aussi un ou plusieurs cadres transversaux intermédiaires (12A), parallèles aux deux cadres transversaux latéraux (12) et liés auxdites barres transversales longitudinales (18As, 18Ai; 18Bs, 18Bi), et le chariot (10A) est pourvu de cadres transversaux intermédiaires (12A), des moyens de connexion cylindriques verticaux à charnière (42) sont fournis entre les cadres transversaux intermédiaires (12A) et les barres transversales longitudinales (18As, 18Ai; 18Bs, 18Bi).

3. Chariot (10; 10A) selon la revendication 1, où les moyens de support (20; 20A) sont fixés sur le côté de chaque cadre transversal (12; 12A) faisant face au cadre transversal adjacent (12; 12A), les moyens de support comprenant des éléments étriers (26; 26A) sur lesquels le côté associé d'un récipient pour contenir des produits repose.

4. Chariot selon la revendication 3, où les moyens de support comprennent des éléments étriers qui se replient pour permettre la rotation des cadres transversaux (12; 12A) par rapport aux barres transversales longitudinales (18s, 18i; 18As, 18Ai; 18Bs, 18Bi).

5. Chariot (10; 10A) selon la revendication 1, où les moyens de support (20; 20A) sont fixés de façon détachable à la structure (11; 11A, 11B).

6. Chariot (10C) selon la revendication 1, où les moyens de support comprennent les mêmes barres transversales longitudinales (18s, 18i), sur lesquelles les récipients pour contenir des produits (52s, 52i) reposent directement.

7. Chariot (10; 10A) selon la revendication 3, où chaque moyen de support (20; 20A) comprend une pluralité de supports étriers (26; 26A) superposés et équidistants, chaque support étrier permettant à une des deux côtés d'un récipient pour contenir des produits d'y reposer.

8. Chariot (10; 10A) selon la revendication 3, où les moyens de support (20; 20A) sont pendus sur le cadre transversal associé (12; 12A).

9. Chariot (10; 10A; 10C) selon la revendication 1, où, agencé sur l'extrémité supérieure de chaque tuyau (36), est situé un centreur en forme de cône tronqué (48) pour centrer la tige (32) par rapport au montant (14), perforé coaxialement pour pouvoir être introduit centré sur le tuyau (36), un deuxième centreur (50) perforé coaxialement pour pouvoir être introduit centré aussi sur la tige (32) est agencé sur le ressort (38), à l'intérieur du montant (14) associé étant pourvus des moyens de positionnement pour le deuxième centreur (50) de façon à ce que à un certain point du fonctionnement pour dévisser les éléments de préhension (30) les ressorts (38) déterminent aussi le soulèvement des cadres transversaux (12; 12B) pour faciliter leur rotation par rapport aux barres transversales longitudinales (18s, 18i; 18As, 18Ai; 18Bs, 18Bi).

10. Chariot (10; 10A; 10C) selon la revendication 1, où entre les éléments de préhension (30) et les barres transversales longitudinales supérieures associées (18s; 18As; 18Bs) une plaque perforée (40) est interposée, en forme de selle sur le fond pour loger la barre transversale longitudinale supérieure (18s; 18As; 18Bs) jointe à elle.

11. Chariot (10A) selon la revendication 2, où la structure (11A) est pourvue d'un cadre transversal intermédiaire (12A).

12. Chariot selon la revendication 2, où la structure (11B) est pourvu de deux cadres transversaux intermédiaires (12A).

13. Chariot (10; 10A) selon la revendication 3, où les moyens de support (20) comprennent un cadre (21) formé par barres verticales (22) et barres horizontales (24), une pluralité de supports étriers (26) formés par des barres en forme de U rangées horizontalement saillant du cadre (21), le cadre (21) étant fourni de crochets (28) qui lui permettent d'être pendu sur les barres transversales (16) du cadre transversal correspondant (12; 12A).

14. Chariot (10; 10A) selon la revendication 3, où les moyens de support (20A) comprennent :
un cadre (21A) formé par deux barres verticales (22A) et barres horizontales (24A), les barres verticales (22A) ayant une série correspondante de trous débouchants dans lesquels sont introduites les extrémités des supports étriers horizontaux (26A) formés par des barres en forme de Q, élastiquement déformables pour pouvoir être introduits ;
éléments à crochet (28A) fixable aux barres transversales (16) des cadres transversaux (12, 12A) et auxquels les cadres correspondants (21A) sont fixés.
